# EUROPÄISCHE PATENTSCHRIFT

(11) **EP 0 691 287 B1**
(45) Veröffentlichungstag und Bekanntmachung des Hinweises auf die Patenterteilung: **19.05.1999**
(21) Anmeldenummer: 95109989.4
(22) Anmeldetag: 24.06.1995
(51) Int. Cl.: B65F 1/14, C05F 17/02

(54) **Abfallbehälter mit Streuvorrichtung zum Bestreuen kompostierbarer Abfälle**
Refuse container having a spreading device for sprinkling degradable waste
Poubelle avec un dispositif d'épandage sur les déchets compostables

(30) Priorität: 08.07.1994 DE 4424182
(43) Veröffentlichungstag der Anmeldung: 10.01.1996
(73) Patentinhaber: Joswig, Hans-Jürgen, 57520 Emmerzhausen (DE); Heissenberg, Arnika, 35767 Breitscheid (DE)
(72) Erfinder:
(74) Vertreter: Grommes, Karl F., Dr.

(56) Entgegenhaltungen:
- EP-A- 0 392 075
- DE-U- 9 411 101
- FR-E- 39 554
- GB-A- 295 188
- GB-A- 1 149 156
- NL-A- 7 809 139
- US-A- 2 770 354

## Beschreibung

### Technisches Gebiet

Die Erfindung betrifft einen mit einem Deckel versehenen Abfallbehälter, insbesondere Abfalltonne (Biotonne), Kompostsilo o.ä. für kompostierbare Abfälle gemäß dem Oberbegriff des Anspruchs 1.

### Stand der Technik

Kompostierbare Haus- und Gartenabfälle werden üblicherweise in separaten Behältern (vor allem sogenannten Biotonnen) zwischengelagert und in vorgegebenen zeitlichen Abständen (z.B. alle 14 Tage) durch entsprechende Fachunternehmen zur Kompostierung in Großanlagen entleert. Besonders im Sommer beginnen die Abfälle aufgrund der hohen Temperaturen mit dem biologischen Zersetzungs bzw. Faulungsprozeß bereits in der Biotonne. Der Zersetzungsprozeß zieht Kleinlebewesen an und führt unter anderem zu einer starken Geruchsbelästigung. Die Grenzen der Hygiene sind oftmals erreicht oder sogar deutlich überschritten. Ausspülen der Tonne nach der jeweiligen Leerung sorgt in der Regel nur vorübergehend für Abhilfe. Bereits nach Wenigen Füllvorgängen kommt es innerhalb weniger Tage erneut zu den unerwünschten Zersetzungsprozessen mit den entsprechenden negativen Folgen.

Zur Vermeidung von Geruchsbelästigungen ist es im Zusammenhang mit der Kompostierung von Fäkalien bereits bekannt, sogenannte Streutoiletten zu verwenden. Dabei werden die Exkremente nach Benutzung der Toilette mittels einer ortsfesten Streuvorrichtung mit einem Deckmaterial, wie Erde, Torf oder Kalk, abgedeckt. Die bekannten Streuvorrichtungen weisen einen relativ voluminösen Vorratsbehälter auf, der in der Regel separat vom Toilettendeckel angeordnet, aber mit diesem derart gekoppelt ist, daß beim Herunterklappen des Deckels eine angemessene Portion des Streumaterials automatisch auf die Exkremente gestreut wird.

Insgesamt handelt es sich um einen voluminösen und auch komplizierten Streumechanismus. Außerdem ist die ortsfeste Anordnung der Streuvorrichtung problematisch und ihre Installation relativ kostenaufwendig.

### Darstellung der Erfindung

Der vorliegenden Erfindung liegt die Aufgabe zugrunde, einen Behälter der angegebenen Art so weiterzubilden, daß sich damit auf einfache und wirksame Weise Zersetzungserscheinungen bzw. die damit in Zusammenhang stehenden Geruchsbelästigungen verzögern lassen.

Diese Aufgabe wird erfindungsgemäß durch die Merkmale des kennzeichnenden Teils des Anspruchs 1 gelöst. Die Unteransprüche geben besonders vorteilhafte Ausgestaltungen der Erfindung wieder.

Die Erfindung beruht im wesentlichen auf dem Gedanken, eine Streuvorrichtung mit Vorratsbehälter an dem Deckel des jeweiligen Abfallbehälters anzuordnen. Dabei ist der bei bestimmungsgemäßer Verwendung der Streuvorrichtung den kompostierbaren Abfällen zugewandte Boden des Vorratsbehälters siebartig mit Löchern versehen, durch die das Deckmaterial auf die Abfälle fällt. In dem Vorratsbehälter ist ein aus mindestens zwei Radialwänden bestehendes (und vorzugsweise mittels einer von außen betätigbaren Handkurbel) drehbares Element angeordnet, so daß bei Drehung dieses Elementes das Deckmaterial (insbesondere Kalk) über die Löcher geschoben wird und verteilt auf die kompostierbaren Abfälle fällt.

Soweit bereits Maßnahmen und Vorrichtungen zum Aufbringen von Abdeckmaterial vorgeschlagen worden sind, fehlt es an gezielten Hinweisen auf die hier erörterte Lösung. So ist durch die FR-E- 39 554 eine Vorrichtung bekannt, bei der mit Hilfe von Schwer- und Zentrifugalkräften pulvriges Material (z.B. Reispulver) über eine Siebtrommel ausgetragen werden kann. Indes ist weder daran gedacht, damit Abdeckmaterial für kompostierbare Abfälle auszutragen, erst recht nicht, eine solche Vorrichtung am Deckel eines Abfallbehälters anzuordnen, noch erscheint jene Vorrichtung aufgrund ihres Aufbaus und vor allem ihrer Wirkungsweise dafür geeignet.

Durch die EP-A-0 392 075 ist ein nach oben offenes zylindrisches Haushaltssieb bekannt, mit dem pulvriges Material, insbesondere Mehl über einen ebenen Siebboden geführt und als Siebgut in einem darunter befindlichen Behälter zur weiteren Verarbeitung entnommen werden kann. Auch dabei fehlt es an Hinweisen bzw. an einer entsprechenden Eignung für den hier interessierenden Einsatzzweck.

Mit der GB-A-1 149 156 schließlich wird nur soviel mitgeteilt, daß eine Kompostierung in einem offenen Standrohr mit einem sich von unten nach oben verjüngenden Querschnitt erfolgen soll, wobei in verschiedenen Abständen ein Pulver zugegeben wird, welches die Kompostierung unterstützen soll. Sinn und Zweck jenes Vorschlags laufen vor allem darauf hinaus, die zur Kompostierung anstehende Masse für die Dauer der Kompostierung zusammenzuhalten, gelegentlich versetzen und wenden zu können sowie letztlich in Form zu bringen.

Damit bei der vorliegenden Erfindung in der Ruheposition der Streuvorrichtung kein Deckmaterial durch die Löcher im Boden des Vorratsbehälters fällt, und um zu vermeiden, daß Feuchtigkeit in den Vorratsbehälter gelangt, sind die Löcher lediglich in streifenförmigen Bereichen angeordnet und werden diese durch entsprechende streifenförmige Schließbleche abgedeckt, welche an den bodenseitigen Enden der Radialwände des drehbaren Elementes angeordnet sind.

Es hat sich als besonders vorteilhaft erwiesen, wenn mindestens eine Radialwand an ihrem bodenseitigen Ende mit einer Reibebürste versehen ist, die bei Drehung des drehbaren Elementes den Boden des Vorratsbehälters von eventuellen Ablagerungen des Deckmaterials säubert. Außerdem sind die Schließbleche vorzugsweise derart ausgebildet, daß sie beim Drehen der Handkurbel eine Zerkleinerung des Deckmaterials, also insbesondere des (gelöschten) Kalks, bewirken.

Um auf einfache Weise neues Deckmaterial in den Vorratsbehälter nachzufüllen, kann in dem Deckel des Abfallbehälters eine verschließbare Öffnung vorgesehen werden. In dem Zusammenhang ist es von Vorteil, wenn der obere Abschluß des Vorratsbehälters der Streuvorrichtung durch den Deckel des Abfallbehälters gebildet wird.

### Kurze Beschreibung der Zeichnung

Weitere Einzelheiten und Vorteile der Erfindung werden im folgenden anhand eines in Figuren dargestellten Ausführungsbeispieles erläutert. Es zeigen:
- Fig.1: den Querschnitt eines erfindungsgemäß ausgestaltenen Deckels einer Biotonne mit einer Streuvorrichtung und
- Fig.2: die Draufsicht auf die in Fig.1 dargestellte Streuvorrichtung entlang der mit II-II bezeichneten Schnittlinie.

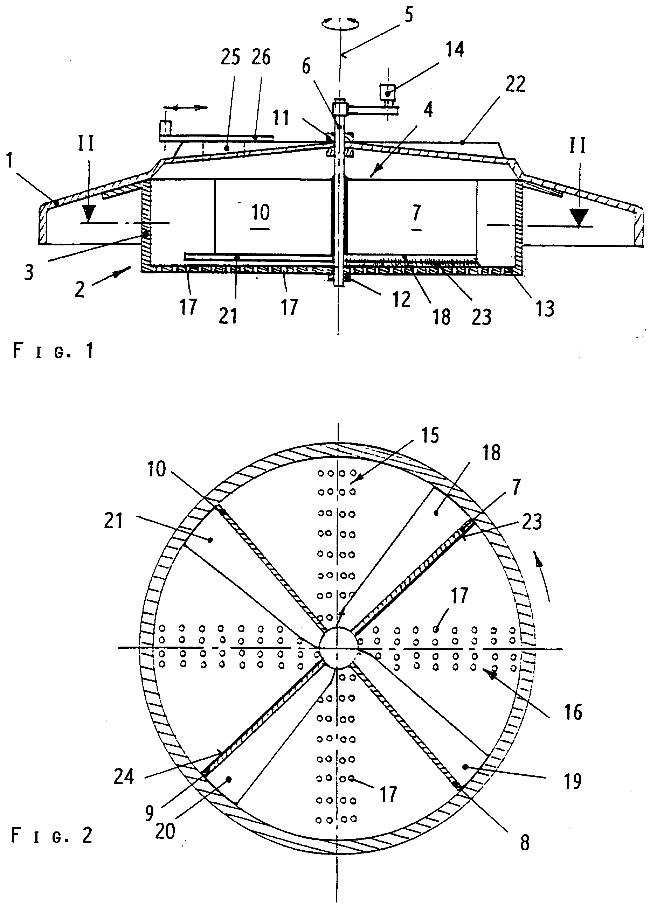

In Fig.1 ist mit 1 ein Kunststoffdeckel einer ansonsten üblichen Biotonne und mit 2 die erfindungsgemäß vorgesehene Streuvorrichtung bezeichnet. Der darunterliegende Behälter- oder Stauraum der Biotonne für die kompostierbaren Abfälle ist hier aus Gründen der Vereinfachung und besseren Übersicht nicht näher dargestellt. Die Streuvorrichtung 2 besteht im wesentlichen aus einem Vorratsbehälter 3, in dem sich das Deckmaterial - also z.B. gelöschter Kalk (nicht dargestellt) - befindet, und aus einem drehbaren Element 4, welches aus einer sich in Richtung der Längsachse 5 des Vorratsbehälters 3 erstreckenden Welle 6 besteht, an der vier flügelartige Radialwände 7-10 angeordnet sind, die den Vorratsbehälter 3 in eine entsprechende Anzahl von Teilräumen aufteilen.

Die Welle 6 des drehbaren Elementes 4 ist in entsprechenden Laufbuchsen 11, 12 am Boden 13 des Vorratsbehälters 3 und am Deckel 1 der Biotonne derart gelagert, daß sie auch durch Zug- bzw. Druckbewegungen nicht aus ihrer Lagerposition herausgezogen werden kann. Die Welle 6 reicht durch den Deckel 1 der Biotonne hindurch und ist außen mit einer Handkurbel 14 verbunden.

Im Boden 13 des Vorratsbehälters 3 befinden sich zwei streifenförmige Lochreihen 15, 16, die im rechten Winkel zueinander versetzt sind und eine Vielzahl von Bohrungen 17 aufweisen.

An den Radialwänden 7-10 sind Schließbleche 18-21 befestigt, deren Breite und Länge derart gewählt sind, daß sie in einer definierten Position -die auf der Deckeloberfläche 22 markiert ist- die Bohrungen 17 der Lochstreifen 15, 16 verschließen. Auf der den Schließblechen 18 und 20 abgewandten Seite der Radialwände 7 und 9 sind Reibebürsten 23, 24 befestigt.

Um das Deckmaterial in den Vorratsbehälter einzubringen, ist in den Deckel 1 eine Öffnung 25 eingebracht, die durch ein Schiebeelement 26 verschließbar ist.

Im folgenden wird auf die Verwendung und Funktionsweise der Erfindung eingegangen: Bevor die Biotonne mit kompostierbaren Abfällen gefüllt wird, wird der Vorratsbehälter 3 z.B. mit Kalk gefüllt. Hierzu bleibt die Biotonne geschlossen, d.h. der Deckel 1 befindet sich auf der Tonne. Die Handkurbel 14 wird über die auf dem Deckel 1 gekennzeichnete Markierung gedreht, so daß die Schließbleche 18-21 die Löcher 17 der streifenförmigen Lochreihen 15, 16 abdecken. Anschließend wird das Schiebeelement 26 nach außen verschoben und in die freiwerdende Öffnung 25 das Deckmaterial eingefüllt und die Öffnung 25 durch Verschieben des Elementes 26 wieder geschlossen.

Nach dem Befüllen der Biotonne mit neuen Abfällen wird der Deckel 1 geschlossen und die Handkurbel 14 einige Male, je nach Rieselbedarf, gedreht. Durch die Drehbewegung der Radialwände 7-10 wird der Kalk über die Bohrungen 17 geschoben und fällt zerstäubt und verteilt auf die neuen Abfälle in der Biotonne und verhindert damit deren vorzeitige mit entsprechender Geruchsbildung verbundene Zersetzung.

Die vorgeschlagene Streuvorrichtung 2 ist im übrigen so konzipiert, daß sie sowohl in die Deckel 1 vorhandener Biotonnen, z.B. durch den Verwender selbst, integriert werden als auch direkt als Einheit mit dem Deckel in Form eines Austauschdeckels für vorhandene Biotonnen hergestellt werden kann.

Selbstverständlich ist die Erfindung nicht auf das beschriebene Ausführungsbeispiel beschränkt. So kann beispielsweise die Öffnung für das Nachfüllen mit Deckmaterial auch seitlich an dem Vorratsbehälter angeordnet werden, wenn der Vorratsbehälter einen separaten oberen Abschluß (Boden) aufweist. Anstatt der vier flügelartigen Radialwände können auch lediglich zwei Radialwände und entsprechend nur eine durchgehende streifenförmige Lochreihe verwendet werden. Ferner können die Schließbleche derart ausgebildet sein, daß bei ihrer Drehbewegung eine Zerkleinerung des Deckmaterials erfolgt. Insbesondere bei Verwendung von Kalk bietet sich eine derartige Ausgestaltung der Schließbleche 18-21 an, da sich unter Feuchtigkeitseinwirkung immer wieder Klumpen in dem Vorratsbehälter 3 bilden.

## Patentansprüche

1. Mit einem Deckel versehener Abfallbehälter, insbesondere Abfalltonne (Biotonne), Kompostsilo o.ä. für kompostierbare Abfälle, **gekennzeichnet durch** die Merkmale:
a) an dem Deckel (1) des Abfallbehälters ist eine Streuvorrichtung (2) mit einem Vorratsbehälter (3) zur Bestreuung der kompostierbaren Abfälle mit einem Deckmaterial angeordnet,
b) der bei der bestimmungsgemäßen Verwendung der Streuvorrichtung (2) den kompostierbaren Abfällen zugewandte Boden (13) des Vorratsbehälters (3) ist mindestens in einem Teilbereich (15, 16) siebartig mit einer Vielzahl von Löchern (17) versehen und
c) in dem Vorratsbehälter (3) ist ein aus mindestens zwei Radialwänden (7-10) bestehendes und um die Längsachse (5) des Vorratsbehälters (3) drehbares Element (4) angeordnet, so daß bei Drehung des Elementes (4) das Deckmaterial über die Löcher (17) im Boden (13) des Vorratsbehälters (3) geschoben wird und verteilt auf die kompostierbaren Abfälle fällt.

2. Abfallbehälter nach Anspruch 1, **dadurch gekennzeichnet**, daß das drehbare Element (4) mit einer außenliegenden Handkurbel (14) versehen ist.

3. Abfallbehälter nach Anspruch 1 oder 2, **dadurch gekennzeichnet**, daß an den bodenseitigen Enden der Radialwände (7-10) des drehbaren Elementes (4) Schließbleche (18-21) angeordnet sind, deren Länge und Breite derart gewählt sind, daß sie in einer vorgebbaren Position die Löcher (17) in dem Boden (13) des Vorratsbehälters (3) verschließen.

4. Abfallbehälter nach einem der Ansprüche 1 bis 3, **dadurch gekennzeichnet**, daß an den bodenseitigen Enden der Radialwände (7-10) des drehbaren Elementes (4) Reibebürsten (23, 24) angeordnet sind.

5. Abfallbehälter nach Anspruch 3 oder 4, **dadurch gekennzeichnet**, daß die Schließbleche (18-21) derart ausgebildet sind, daß sie bei ihrer Drehung in dem Vorratsbehälter (3) eine Zerkleinerung des Deckmaterials bewirken.

6. Abfallbehälter nach einem der Ansprüche 1 bis 5, **dadurch gekennzeichnet**, daß der die Löcher (17) aufweisende Teilbereich (15, 16) des Bodens (13) des Vorratsbehälters (3) streifenförmig ausgebildet ist, wobei sich jede streifenförmige Lochreihe (15, 16) im wesentlichen über den gesamten Querschnitt des Bodens (13) erstreckt.

7. Abfallbehälter nach Anspruch 6, **dadurch gekennzeichnet**, daß die streifenförmigen Lochreihen (15, 16) im rechten Winkel zueinander versetzt sind.

8. Abfallbehälter nach einem der Ansprüche 1 bis 7, **dadurch gekennzeichnet**, daß der Vorratsbehälter (3) der Streuvorrichtung (2) aus Kunststoff oder einem rost- und säurebeständigen Edelstahlblech besteht.

9. Abfallbehälter nach einem der Ansprüche 1 bis 8, **dadurch gekennzeichnet**, daß der obere Abschluß des Vorratsbehälters (3) der Streuvorrichtung (2) durch den Deckel (1) des Abfallbehälters gebildet ist.

10. Abfallbehälter nach einem der Ansprüche 1 bis 9, **dadurch gekennzeichnet**, daß es sich bei dem Abfallbehälter um eine handelsübliche Biotonne handelt und die Streuvorrichtung als ein am Deckel (1) der Biotonne anbringbares Nachrüstteil ausgebildet ist.

## Claims

1. A refuse container provided with a cover, in particular a refuse barrel (compost bin), compost silo or the like for compostable refuse, characterised by the features:
a) a scattering device (2) with a storage container (3) is arranged on the cover (1) of the refuse container for scattering the compostable refuse with a covering material,
b) the base (13) of the storage container (3) facing the compostable refuse with the use of the scattering device (2) as stipulated is provided at least in a partial region (15, 16) in the manner of a sieve with a plurality of holes (17) and
c) in the storage container (3) a member (4) is arranged consisting of at least two radial walls (7-10) and rotatable about the longitudinal axis (5) of the storage container (3), so that on rotation of the member (4), the covering material is pushed via the holes (17) in the base (13) of the storage container (3) and falls in a distributed manner onto the compostable refuse.

2. A refuse container according to Claim 1, characterised in that the rotatable member (4) is provided with an external hand crank (14).

3. A refuse container according to Claim 1 or 2, characterised in that at the ends of the radial walls (7-10) of the rotatable member (4) on the base side, closure plates (18-21) are arranged, the length and width of which are selected such that in a specifiable position they close the holes (17) in the base (13) of the storage container (3).

4. A refuse container according to one of Claims 1 to 3, characterised in that friction brushes (23, 24) are arranged at the base-side ends of the radial walls (7-10) of the rotatable member (4).

5. A refuse container according to Claim 3 or 4, characterised in that the closure plates (18-21) are constructed such that, on their rotation in the storage container (3) they bring about a comminution of the covering material.

6. A refuse container according to any of Claims 1 to 5, characterised in that the partial region (15, 16) of the base (13) of the storage container (3) having the holes (17) is constructed in a strip shape, each strip-shaped row of holes (15, 16) extending substantially over the entire cross-section of the base (13).

7. A refuse container according to Claim 6, characterised in that the strip-shaped rows of holes (15, 16) are staggered at right-angles to each other.

8. A refuse container according to any of Claims 1 to 7, characterised in that the storage container (3) of the scattering device (2) consists of plastics or of a rust- and acid-resistant high-tensile steel sheet.

9. A refuse container according to any of Claims 1 to 8, characterised in that the upper closure of the storage container (3) of the scattering device (2) is formed by the cover (1) of the refuse container.

10. A refuse container according to any of Claims 1 to 9, characterised in that the refuse container is a commercially available compost bin and the scattering device is constructed as a supplementary part which can be applied to the cover (1) of the compost bin.

## Revendications

1. Récipient à déchets, en particulier fût à déchets (biofût), silo à compost ou analogue, pourvu d'un couvercle, pour des déchets compostables, caractérisé par les propriétés ci-après :
a) sur le couvercle (1) du récipient à déchets est disposé un dispositif d'épandage (2) équipé d'un récipient de stockage (3), pour épandre les déchets compostables avec un matériau de couverture,
b) le fond (13), qui en cas d'utilisation conforme du dispositif d'épandage (2) est tourné vers les déchets compostables, du récipient de stockage (3) est doté en au moins une zone partielle (15, 16), à la façon d'un tamis, d'une pluralité de trous (17), et
c) dans le récipient de stockage (3) est disposé un élément (4), constitué d'au moins deux parois radiales (7-10) et susceptible de tourner autour de l'axe longitudinal (5) du récipient de stockage (3), si bien que, lors de la rotation de l'élément (4), le matériau de couverture est poussé sur les trous (17) ménagés dans le fond (13) du récipient de stockage (3) et tombe de façon répartie sur les déchets compostables.

2. Récipient à déchets selon la revendication 1, caractérisé par le fait que l'élément (4) susceptible de tourner est doté d'une manivelle (14) montée extérieurement.

3. Récipient à déchets selon la revendication 1 ou 2, caractérisé par le fait que, aux extrémités situées coté fond des parois radiales (7-10) de l'élément (4) susceptible de tourner, sont disposées des tôles de fermeture (18-21), dont la longueur et la largeur sont choisies de façon qu'elles ferment les trous (17) ménagés dans le fond (13) du récipient de stockage (3), lorsqu'on se trouve dans une position susceptible d'être prédéterminée.

4. Récipient à déchets selon l'une des revendications 1 à 3, caractérisé par le fait que des brosses frottantes (23, 24) sont disposées aux extrémités situées coté fond des parois radiales (7-10) de l'élément (4) susceptible de tourner.

5. Récipient à déchets selon la revendication 3 ou 4, caractérisé par le fait que les tôles de fermeture (18-21) sont réalisées de manière que, lors de leur rotation dans le récipient de stockage (3), elles provoquent un broyage de fragmentation du matériau de couverture.

6. Récipient à déchets selon l'une des revendications 1 à 5, caractérisé par le fait que la zone partielle (15, 16), présentant les trous (17), du fond (13) du récipient de stockage (3) est réalisée en forme de bande, chaque rangée de trous (15,16) en forme de bande s'étendant sensiblement sur toute la section transversale du fond (13).

7. Récipient à déchets selon la revendication 6, caractérisé par le fait que les rangées de trous (15, 16) en forme de bande sont décalées les unes par rapport aux autres à angle droit.

8. Récipient à déchets selon l'une des revendications 1 à 7, caractérisé par le fait que le récipient de stockage (13) du dispositif d'épandage (2) est réalisé en matière synthétique ou bien en tôle d'acier spéciale, résistant à la rouille et aux acides.

9. Récipient à déchets selon l'une des revendications 1 à 8, caractérisé par le fait que la fermeture supérieure du récipient de stockage (3) du dispositif d'épandage (2) est constituée par le couvercle (1) du récipient à déchets.

10. Récipient à déchets selon l'une des revendications 1 à 9, caractérisé par le fait qu'il s'agit, concernant le récipient à déchets, d'un biofût du commerce, et le dispositif d'épandage réalisé sous la forme d'une pièce de rééquipement, susceptible d'être montée sur le couvercle (1) du biofût.
